# EUROPÄISCHE PATENTSCHRIFT

(11) **EP 4 396 545 B1**
(45) Veröffentlichungstag und Bekanntmachung des Hinweises auf die Patenterteilung: **01.04.2026**
(21) Anmeldenummer: 22747715.5
(22) Anmeldetag: 22.07.2022
(51) Int. Cl.: G01F 23/296, G01N 11/16, G01N 9/00, G01F 1/66

(54) **VIBRONISCHER MULTISENSOR**
VIBRONIC MULTISENSOR
MULTICAPTEUR VIBRONIQUE

(30) Priorität: 31.08.2021 DE 102021122533
(43) Veröffentlichungstag der Anmeldung: 10.07.2024
(73) Patentinhaber: Endress+Hauser SE+Co. KG, 79689 Maulburg (DE)
(72) Erfinder: BRENGARTNER, Tobias, 79312 Emmendingen (DE); LOPATIN, Sergey, 79540 Lörrach (DE); SCHLEIFERBÖCK, Jan, 79595 Rümmingen (DE)
(74) Vertreter: Endress + Hauser Group Services (Deutschland) AG+Co. KG
(86) Internationale Anmeldenummer: PCT/EP2022/070623
(87) Internationale Veröffentlichungsnummer: WO 2023/030754

(56) Entgegenhaltungen:
- EP-A1- 0 903 563
- EP-A2- 0 769 682
- DE-A1- 102007 058 608
- DE-A1- 102012 100 728
- DE-A1- 102019 116 150
- US-A- 4 922 745

## Beschreibung

Die Erfindung betrifft eine Vorrichtung zur Bestimmung und/oder Überwachung von zumindest einer Prozessgröße eines Mediums mit den Merkmalen des Oberbegriffs des ersten Anspruchs. Das Medium befindet sich in einem Behältnis, beispielsweise in einem Behälter oder in einer Rohrleitung. Eine gattungsgemäße Vorrichtung offenbart die US 4,922,745 A.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Aus den Dokumenten DE102012100728A1 oder DE102017130527A1 sind verschiedene vibronische Sensoren bekannt geworden, bei denen die piezoelektrischen Elemente zumindest teilweise innerhalb der schwingfähigen Einheit angeordnet sind. Mit derartigen und ähnlichen Anordnungen lassen sich vorteilhaft mit einem einzigen Sensor mehrere Prozessgrößen bestimmen und zur Charakterisierung von unterschiedlichen Prozessen heranziehen, wie beispielsweise aus den Dokumenten WO2020/094266A1, DE102019116150A1, DE102019116151A1, DE02019116152A1, DE102019110821A1, DE102020105214A1 oder DE102020116278A1 bekannt geworden.

Bei vibronischen Sensoren hängt die Schwingfrequenz der schwingfähigen Einheit hauptsächlich von der Geometrie und Anordnung der Schwingelemente ab. Ist zumindest ein piezoelektrisches Element in einem Innenvolumen der schwingfähigen Einheit angeordnet, so kann diese spezielle Anordnung die mechanischen Schwingungseigenschaften der schwingfähigen Einheit deutlich beeinflussen. Beispielsweise kann das piezoelektrische Element in der schwingfähigen Einheit vergossen oder in ein Innenvolumen der schwingfähigen Einheit eingeklebt sein. In diesem Falle können beispielsweise Alterungseffekte in dem Verguss oder Klebstoff zu Änderungen des Schwingungsverhaltens, insbesondere zu einer Drift der ermittelten Werte für die jeweilige Prozessgröße, wie beispielsweise ein Füllstand, oder eine Medieneigenschaft, wie die Dichte oder Viskosität.

Für besondere Anwendungsgebiete ist es auch bekannt, das Innere eines vibronischen Sensors mit einer besonderen Einbettmasse oder Vergussmasse auszufüllen (vgl. DE 10 2007 058 608 A1 sowie EP 0 769 682 A2).

Es ist auch bekannt, vibronische Sensoren als nieder- und hochfrequentes Messsystem zu betreiben (EP 0 903 563 A1).

Daher liegt der vorliegenden Erfindung die Aufgabe zugrunde, einen hinsichtlich des mechanischen Schwingungsverhaltens langzeitstabilen, vibronischen Sensor bereitzustellen.

Diese Aufgabe wird gelöst durch eine Vorrichtung mit den Merkmalen des ersten Anspruchs.

Bei der mechanisch schwingfähigen Einheit handelt es sich beispielsweise um eine Membran, einen Einstab, eine Anordnung von zumindest zwei Schwingelementen, oder um eine Schwinggabel. Das piezoelektrische Element ist gemeinsam mit dem Koppelelement in dem Innenvolumen der schwingfähigen Einheit angeordnet. Dabei dient das Koppelelement der mechanischen Entkopplung des piezoelektrischen Elements, insbesondere der einseitigen Entkopplung des piezoelektrischen Elements.

Mittels des Anregesignals werden mechanischen Schwingungen der schwingfähigen Einheit erzeugt, welche im Falle, dass die schwingfähige Einheit von Medium bedeckt ist, von den Eigenschaften des Mediums beeinflusst werden. Entsprechend kann anhand des ersten Empfangssignals, welches die Schwingungen der schwingfähigen Einheit repräsentiert, eine Aussage über die zumindest eine Prozessgröße ermittelt werden. Bei dem Anregesignal handelt es sich beispielsweise um ein elektrisches Signal mit zumindest einer vorgebbaren Frequenz, insbesondere um ein sinusförmiges oder um ein rechteckförmiges Signal. Vorzugsweise wird die mechanisch schwingfähige Einheit zumindest zeitweise zu Resonanzschwingungen angeregt. Die Vorrichtung kann ferner eine Elektronik, beispielsweise zur Signalerfassung und/oder - speisung umfassen.

In einer Ausgestaltung ist die Vorrichtung dazu ausgestaltet, ein Sendesignal auszusenden und ein zweites Empfangssignals zu empfangen, und anhand des ersten und/oder zweiten Empfangssignals die zumindest eine Prozessgröße zu bestimmen und/oder zu überwachen.

In diesem Fall dient das piezoelektrische Element einerseits als Antriebs-/Empfangseinheit zur Erzeugung der mechanischen Schwingungen der mechanisch schwingfähigen Einheit und zur Aussendung des Sendesignals, welches in Form des zweiten Empfangssignals empfangen wird. Bei dem Sendesignal handelt es sich bevorzugt um ein, insbesondere gepulstes, Ultraschallsignal, insbesondere um zumindest einen Ultraschallpuls. Als zweites angewendetes Messverfahren wird demnach im Rahmen der vorliegenden Erfindung eine Ultraschall-basierte Messung durchgeführt.

Wenn das Sendesignal auf seinem Weg zumindest zeitweise und abschnittsweise das Medium durchläuft, wird es ebenfalls durch die physikalischen und/oder chemischen Eigenschaften des Mediums beeinflusst und kann entsprechend zur Bestimmung einer Prozessgröße des Mediums herangezogen werden. Somit können im Falle, dass ein Anregesignal und ein Sendesignal erzeugt werden, zumindest zwei Messprinzipien in einer einzigen Vorrichtung realisiert zumindest zwei unterschiedliche Prozessgrößen ausgewertet werden. Die beiden Empfangssignale können dabei vorteilhaft unabhängig voneinander ausgewertet werden. So kann erfindungsgemäß die Anzahl ermittelbarer Prozessgrößen deutlich erhöht werden, was zu einer höheren Funktionalität des jeweiligen Sensors bzw. in einem erweiterten Anwendungsbereich resultiert. Im Zusammenhang mit der zusätzlichen Erzeugung eines Sendesignals sei ferner auf die WO2020/094266A1 verwiesen.

Erfindungsgemäß handelt es sich bei der mechanisch schwingfähigen Einheit eine Schwinggabel mit einem ersten und einem zweiten Schwingelement, wobei das erste piezoelektrische Element zumindest teilweise in dem ersten Schwingelement und das zweite piezoelektrische Element zumindest teilweise in dem zweiten Schwingelement angeordnet ist. Entsprechende Ausgestaltungen einer Sensoreinheit sind beispielsweise in den Dokumenten DE102012100728A1 und DE102017130527A1 beschrieben worden. Bei den in den beiden Dokumenten beschriebenen möglichen Ausgestaltungen der Sensoreinheit handelt es sich um beispielhafte mögliche konstruktive Ausgestaltungen der Sensoreinheit.

In noch einer Ausgestaltung umfasst die Sensoreinheit eine Einheit zur Bestimmung und/oder Überwachung einer Temperatur des Mediums, eine Einheit zur Bestimmung und/oder Überwachung eines Drucks des Mediums und/oder eine Einheit zur Bestimmung und/oder Überwachung einer Leitfähigkeit und/oder Permittivität des Mediums. In diesem Zusammenhang sei auf die Dokumente DE102019116150A1, DE102019116151A1 oder DE02019116152A1 verwiesen.

Erfindungsgemäß ist der Hohlraum mit einer Füllung, insbesondere mit einem Vergussmaterial, beispielsweise einem Klebstoff, gefüllt. Auf diese Weise kann eine kraftschlüssige Verbindung zwischen dem piezoelektrischen Element und der schwingfähigen Einheit erreicht werden. Das Koppelelement ist dann vorteilhaft relativ zu dem piezoelektrischen Element derart angeordnet, dass es das piezoelektrische Element von der Füllung entkoppelt. Auf diese Weise können negative Effekte auf das Schwingungsverhalten der schwingfähigen Einheit aufgrund einer Alterung der Füllung vorteilhaft vermieden bzw. reduziert werden.

In einer vorteilhaften Ausgestaltung der vorliegenden Erfindung besteht das Koppelelement zumindest teilweise aus einem komprimierbaren, insbesondere porösen, Material, insbesondere aus einem Material mit einer Poissonzahl v<0,3. Die Poren des porösen Materials können beispielsweise Ausdehnungseffekte einer Füllung als Funktion der Temperatur kompensieren. In diesem Zusammenhang ist es wiederum von Vorteil, wenn es sich bei dem komprimierbaren Material um einen Schaumstoff, insbesondere auf Basis von Polypropylen, Silikonkautschuk, Polymethylmethacrylat Polyurethan oder Polyamid, ein poröses Papier oder einen aufgeschäumten Klebstoff handelt.

Je nach Wahl des Materials für das Koppelelement kann auch eine akustische Entkopplung des piezoelektrischen Elements erreicht werden, was insbesondere dann von Vorteil ist, wenn neben dem Anregesignal auch das Sendesignal erzeugt wird. Eine akustische Entkopplung ist insbesondere bei Verwendung eines Schaumstoffs für das Koppelelement möglich.

Es ist ferner von Vorteil, wenn das Koppelelement in Form einer dünnen Folie, oder in Form einer Beschichtung, insbesondere einer Beschichtung aus einem Lack, ausgestaltet ist. Eine derartige Ausgestaltung ist fertigungstechnisch besonders einfach realisierbar.

Die Erfindung wird anhand der nachfolgenden Figuren näher erläutert. Es zeigt:
Fig. 1: eine schematische Skizze eines vibronischen Sensors gemäß Stand der Technik,
Fig. 2: verschiedene mögliche Ausgestaltungen für vibronische Sensoren gemäß Stand der Technik, bei denen piezoelektrische Elemente innerhalb der Schwingelemente angeordnet sind,
Fig. 3 eine Ausgestaltung für eine nicht erfindungsgemäße Vorrichtung, und
Fig. 4 eine bevorzugte Ausgestaltung für eine erfindungsgemäße Vorrichtung.

In den Figuren sind gleiche Elemente jeweils mit demselben Bezugszeichen versehen.

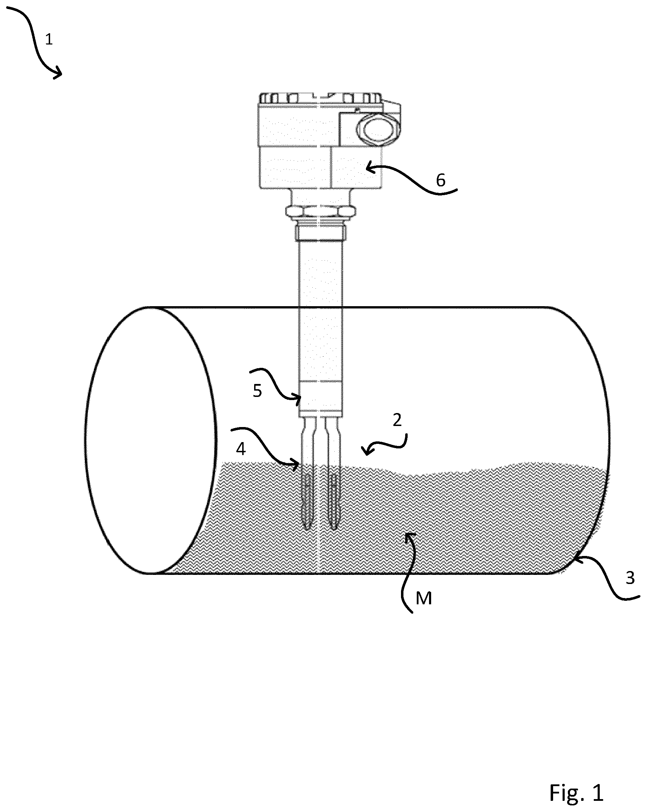

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs- /Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

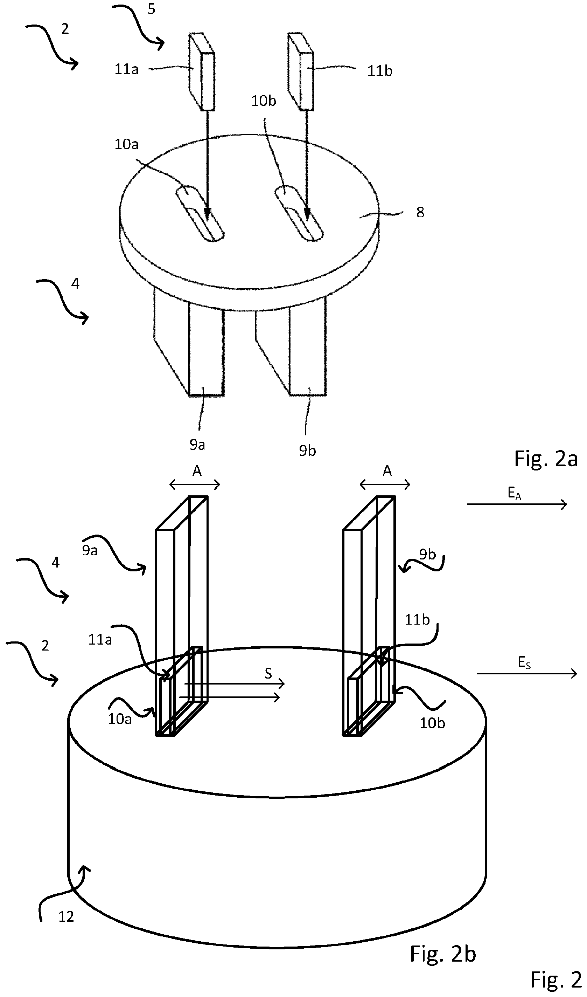

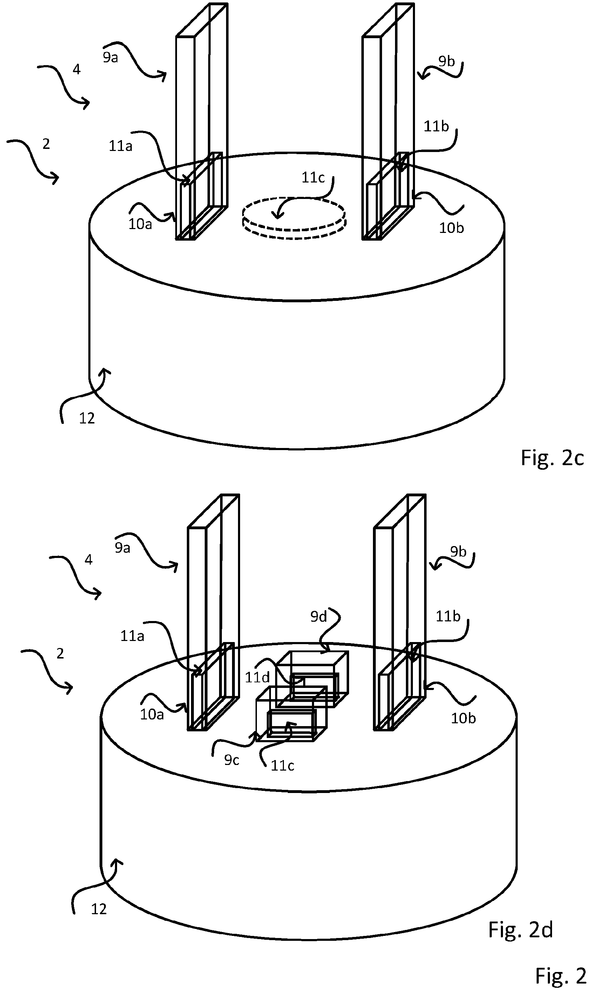

In Fig. 2 sind beispielhaft verschiedene Sensoreinheiten 2 von vibronischen Sensoren 1 gezeigt, bei welchen die piezoelektrischen Elemente. 5 in einem Innenvolumen der schwingfähigen Einheit angeordnet sind. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. Optional kann an den Endseiten der beiden Schwingelemente 9a,9b außerdem jeweils ein Paddel angeformt sein [hier nicht gezeigt]. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden Eine solche sowie ähnliche Anordnungen sind in der DE102012100728A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die bisher unveröffentlichte deutsche Patentanmeldung mit dem Aktenzeichen DE102017130527A1 verwiesen.

Wie in Fig. 2b schematisch eingezeichnet, wird die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a,9b ein separates Empfangssignal E_{A1} bzw. E_{A2} empfangen wird. Darüber hinaus kann beispielsweise vom ersten piezoelektrischen Element 11a ausgehend zudem ein Sendesignal S ausgesendet werden, welches von dem zweiten piezoelektrischen Element 11b in Form eines zweiten Empfangssignals E_{S} empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Vorzugsweise handelt es sich bei dem Sendesignal S um ein, insbesondere gepulstes, Ultraschallsignal, insbesondere um zumindest einen Ultraschallpuls. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal E_{S} vom ersten piezoelektrischen Element 11a empfangen. Das Sendesignal S durchläuft in diesem Falle das Medium M zweimal, was zu einer Verdoppelung einer Laufzeit τ des Sendesignals S führt.

Neben diesen beiden gezeigten Ausgestaltungen einer erfindungsgemäßen Vorrichtung 1 sind noch zahlreiche weitere Varianten denkbar, welche ebenfalls unter die vorliegende Erfindung fallen. Beispielsweise ist es für die Ausgestaltungen gemäß der Figuren Fig. 2a und Fig. 2b möglich, lediglich ein piezoelektrisches Element 11a,11b zu verwenden und zumindest in einem der beiden Schwingelemente 9a, 9b anzuordnen. In diesem Falle dient das piezoelektrische Element 9a zur Erzeugung des Anregesignals, und des Sendesignals S, sowie zum Empfangen des ersten E₁ und zweiten Empfangssignals E₂. Dann wird das Sendesignal S von dem ersten piezoelektrischen Element 11a im Bereich des ersten Schwingelements 9a ausgesendet und an dem zweiten Schwingelement 9b reflektiert, so dass auch das zweite Empfangssignal E_{S} vom ersten piezoelektrischen Element 11a empfangen wird. Das Sendesignal S durchläuft in diesem Falle das Medium M zweimal, was zu einer Verdoppelung einer Laufzeit τ des Sendesignals S führt.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂. Alternativ ist es beispielsweise möglich, mit dem ersten 11a und/oder zweiten piezoelektrischen Element 11b das Anregesignal A und das Sendesignal S zu erzeugen sowie das zweite Empfangssignal E₂ zu empfangen, wobei das dritte piezoelektrische Element 11c zum Empfangen des ersten Empfangssignals E₁ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste E₁ und/oder zweite Empfangssignal E₂ zu empfangen. Auch im Falle der Fig. 2c ist es für andere Ausgestaltungen möglich, auf das erste 11a oder zweite piezoelektrische Element 11b zu verzichten.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c,11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 0d zu verwenden.

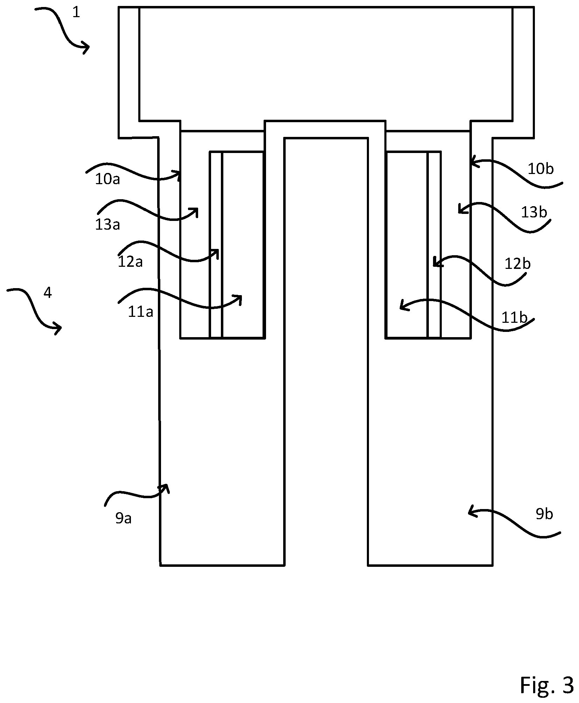

Eine Ausgestaltung für eine nicht erfindungsgemäße Vorrichtung 1 ist in Fig. 3 dargestellt. Die schwingfähige Einheit 4 mit den zwei Schwingelementen 9a, 9b weist zwei Hohlräume 10a, 10b auf, welche jeweils ein Innenvolumen bilden, in welche jeweils ein piezoelektrisches Element 11a, 11b eingebracht ist. Die piezoelektrischen Elemente 11a, 11b sind derart in dem Hohlraum angeordnet, dass die jeweiligen aktiven Flächen der piezoelektrischen Elemente 11a, 11b mit einer Wandung des jeweiligen Hohlraums 9a, 9b abschließen. Zudem ist in jeden der beiden Hohlräume 9a, 9b ein erfindungsgemäßes Koppelelement 12a und 12b eingebracht, wobei sich das jeweilige piezoelektrische Element 11a, 11b jeweils zwischen der Wandung, an welche es anliegt, und dem jeweiligen Koppelelement 12a, 12b angeordnet ist. Die Koppelelemente 12a und 12b liegen demnach an den nicht aktiven Flächen der piezoelektrischen Elemente 11a, 11b an.

Die Koppelelemente 12a, 12b können beispielsweise in Form einer dünnen Folie ausgestaltet sein, oder auch in Form einer Beschichtung, welche auf das jeweilige piezoelektrische Element 11a, 11b aufgebracht sein kann. Im Übrigen sind die beiden Hohlräume 10a, 10b jeweils mit einer Füllung 12a, 12b versehen, welche beispielsweise ein Klebstoff sein kann. Die Füllungen 12a, 12b erleichtern zum einen die Fertigung der Sensoreinheit 2, aber sie können auch dem Schutz der piezoelektrischen Elemente 11a, 11b und ggf. vorhandenen elektrischen Kontaktierungen (hier nicht dargestellt) der piezoelektrischen Elemente 11a, 11b vor Einflüssen aus einer Umgebung der Sensoreinheit 2, beispielsweise vor dem Eindringen von Feuchtekondensat, vor Oxidation, Korrosion oder auch Verschmutzung.

Vorteilhaft wird für jedes in einem Hohlraum 10 angeordnete piezoelektrische Element 1 jeweils ein Koppelelement 12 bereitgestellt. Im Falle, dass nur ein piezoelektrisches Element 9 zum Einsatz kommt, ist entsprechend auch ein einziges Koppelelement 12 ausreichend.

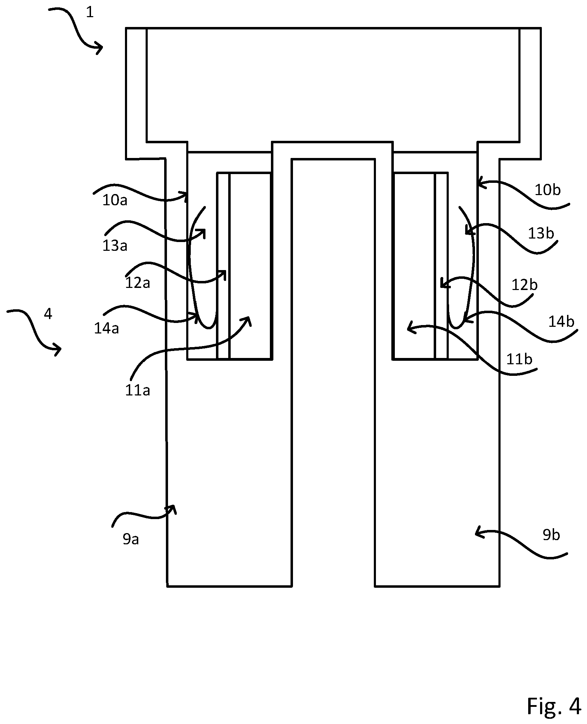

Eine bevorzugte Ausgestaltung für eine erfindungsgemäße Vorrichtung ist Gegenstand von Fig. 4. Die Vorrichtung 1 ist weitgehend analog zu der Variante aus Fig. 3 ausgestaltet. Zusätzlich umfassen die beiden Koppelelemente 12a und 12b jeweils ein Befestigungsmittel 14a, 14b, welches hier jeweils in Form eines Klemmkörpers bzw. in Form eines Federelements ausgestaltet ist. Die Befestigungsmittel 14a, 14b sorgen unter anderem dafür, dass während der Montage der einzelnen Komponenten der Sensoreinheit 2 und während des Füllvorgangs mit der Füllung die piezoelektrischen Elemente 11a, 11b gegen die Wandungen, an welche die jeweiligen Elemente 11a,11b anliegen, gedrückt werden. Dadurch wird die kraftschlüssige Kopplung zwischen den piezoelektrischen Elementen 11a, 11b und den Wandungen des Hohlraums 10a,10b des jeweiligen Schwingelements 9a,9b verbessert.

Die Koppelemente 13a, 13b dienen der mechanischen, und ggf. auch akustischen Entkopplung der piezoelektrischen Elemente 11a, 11b. Durch die Koppelelemente 12a, 12b können negative Einflüsse der Füllung 13a, 13b, insbesondere thermische Ausdehnungseffekte, eliminiert bzw. kompensiert werden. Die Füllung 13a, 13b erfährt so eine geringere Alterung und dies wiederum führt zu einer zeitlich konstanten Frequenzstabilität der Sensoreinheit, insbesondere hinsichtlich der Lage von charakteristischen Frequenzen, wie den Eigenfrequenzen. Eine Drift der Frequenz kann also reduziert oder verhindert werden. Ermöglicht das Koppelelement zudem eine akustische Entkopplung der piezoelektrischen Elemente 11a, 11b, so kann zudem die Laufzeitmessung mittels des Sendesignals S und zweiten Empfangssignals E_{S} über einen breiten Temperaturbereich verbessert werden.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 8: Basis
- 9a, 9b: Schwingelemente
- 10a, 10b: Hohlräume
- 11a, 11b: piezoelektrische Elemente
- 12a, 12b: Koppelelemente
- 13a, 13b: Füllung
- 14a, 14b: Befestigungsmittel

- M: Medium
- P: Prozessgröße
- T: Temperatur
- A: Anregesignal
- S: Sendesignal
- E_{A}: erstes Empfangssignal
- E_{S}: zweites Empfangssignal
- E_{T}: drittes Empfangssignal
- ΔΦ: vorgebbare Phasenverschiebung

## Patentansprüche

1. Vorrichtung (1) zur Bestimmung und/oder Überwachung von zumindest einer Prozessgröße eines Mediums (M) umfassend eine Sensoreinheit (2) mit
einer mechanisch schwingfähigen Einheit (4), und
zumindest einem ersten piezoelektrischen Element (11a, 11b),
wobei das piezoelektrische Element (11a, 11b) zumindest teilweise in einem Innenvolumen (10a, 10b) der schwingfähigen Einheit (4) angeordnet ist,
wobei die Vorrichtung (1) dazu ausgestaltet ist,
die mechanisch schwingfähige Einheit (4) mittels eines Anregesignals (A) zu mechanischen Schwingungen anzuregen,
die mechanischen Schwingungen der schwingfähigen Einheit (4) zu empfangen und in ein erstes Empfangssignal (E_{A}) umzuwandeln, und anhand des ersten Empfangssignals (E_{A}) die zumindest eine Prozessgröße zu bestimmen und/oder zu überwachen, wobei in dem Innenvolumen (10a, 10b) ein Koppelelement (12a, 12b) angeordnet ist derart, dass das Koppelelement (12a, 12b) in mechanischen Kontakt mit dem piezoelektrischen Element (11a, 11b) steht,
wobei zumindest ein Hohlraum (10a, 10b) in die schwingfähige Einheit (4) eingebracht ist,
wobei der Hohlraum (10a, 10b) das Innenvolumen bildet,
wobei das piezoelektrische Element (11a, 11b) und das Koppelelement (12a, 12b) in den Hohlraum (10a, 10b) eingebracht sind,
wobei das piezoelektrische Element (11a, 11b) derart in dem Hohlraum (10a, 10b) angeordnet ist, dass das piezoelektrische Element (11a, 11b) an eine Wandung des Hohlraums (10a, 10b) anliegt, und
wobei das piezoelektrische Element (11a, 11b) zwischen der Wandung und dem Koppelelement (12a,12b) angeordnet ist,
**dadurch gekennzeichnet,**
**dass** der Hohlraum (10a, 10b) mit einem Vergussmaterial gefüllt ist,
**dass** das Koppelelement (12a, 12b) Befestigungsmittel (14a, 14b) zur Befestigung des Koppelelements (12a, 12b) in dem Hohlraum (10a, 10b) aufweist, und
**dass** es sich bei dem Befestigungsmittel (14a, 14b) um ein Federelement handelt.

2. Vorrichtung (1) nach Anspruch 1,
wobei die Vorrichtung (1) dazu ausgestaltet ist, ein Sendesignal (S) auszusenden und ein zweites Empfangssignals (E_{S}) zu empfangen, und
anhand des ersten (E_{A}) und/oder zweiten Empfangssignals (E_{S}) die zumindest eine Prozessgröße zu bestimmen und/oder zu überwachen.

3. Vorrichtung (1) nach Anspruch 1 oder 2,
wobei die Sensoreinheit (2) zumindest ein erstes piezoelektrisches Element (11a) und ein zweites piezoelektrisches Element (11b) umfasst,
wobei die mechanisch schwingfähige Einheit (4) eine Schwinggabel mit einem ersten (9a) und einem zweiten Schwingelement (9b) ist, und
wobei das erste piezoelektrische Element (11a) zumindest teilweise in dem ersten Schwingelement (9a) und das zweite piezoelektrische Element (11b) zumindest teilweise in dem zweiten Schwingelement (9b) angeordnet ist.

4. Vorrichtung (1) nach einem der Ansprüche 1 bis 3,
wobei das Koppelelement (12a, 12b) zumindest teilweise aus einem komprimierbaren Material, insbesondere aus einem Material mit einer Poissonzahl v<0,3, besteht.

5. Vorrichtung (1) nach Anspruch 4,
wobei es sich bei dem komprimierbaren Material um einen Schaumstoff handelt.

6. Vorrichtung (1) nach Anspruch 4 oder 5,
wobei das Koppelelement (12a,12b) in Form einer dünnen Folie oder in Form einer Beschichtung ausgestaltet ist.

## Claims

1. A device (1) for determining and/or monitoring at least one process variable of a medium (M), comprising a sensor unit (2) with
a unit capable of mechanically oscillating (4), and
at least one first piezoelectric element (11a, 11b),
wherein the piezoelectric element (11a, 11b) is arranged at least partially in an internal volume (10a, 10b) of the unit capable of oscillating (4),
wherein the device (1) is configured to
cause the unit capable of mechanically oscillating (4) to mechanically oscillate using an excitation signal (A),
receive the mechanical oscillations of the unit capable of oscillating (4) and convert them into a first received signal (E_{A}), and to determine and/or monitor the at least one process variable on the basis of the first received signal (E_{A}),
wherein a coupling element (12a, 12b) is arranged in the internal volume (10a, 10b) in such a way that the coupling element (12a, 12b) is in mechanical contact with the piezoelectric element (11a, 11b),
wherein at least one cavity (10a, 10b) is created in the unit capable of oscillating (4),
wherein the cavity (10a, 10b) forms the internal volume,
wherein the piezoelectric element (11a, 11b) and the coupling element (12a, 12b) are inserted into the cavity (10a, 10b),
wherein the piezoelectric element (11a, 11b) is arranged in the cavity (10a, 10b) in such a way that the piezoelectric element (11a, 11b) rests against a wall of the cavity (10a, 10b), and
wherein the piezoelectric element (11a, 11b) is arranged between the wall and the coupling element (12a, 12b),
**characterized in that**
the cavity (10a, 10b) is filled with a casting material,
the coupling element (12a, 12b) has fixings (14a, 14b) for mounting the coupling element (12a, 12b) in the cavity (10a, 10b), and
the fixing (14a, 14b) is a spring element.

2. The device (1) as claimed in claim 1,
wherein the device (1) is configured to transmit a transmission signal (S) and to receive a second received signal (E_{S}), and
to determine and/or monitor the at least one process variable on the basis of the first (E_{A}) and/or second received signal(s) (E_{S}).

3. The device (1) as claimed in claim 1 or 2,
wherein the sensor unit (2) comprises at least one first piezoelectric element (11a) and a second piezoelectric element (11b),
wherein the unit capable of mechanically oscillating (4) is an oscillating fork with a first (9a) and a second (9b) oscillating element, and
wherein the first piezoelectric element (11a) is arranged at least partially in the first oscillating element (9a), and the second piezoelectric element (11b) is arranged at least partially in the second oscillating element (9b).

4. The device (1) as claimed in one of claims 1 to 3,
wherein the coupling element (12a, 12b) consists at least partially of a compressible material, in particular from a material with a Poisson's ratio of v < 0.3.

5. The device (1) as claimed in claim 4,
wherein the compressible material is a foam.

6. The device (1) as claimed in claim 4 or 5,
wherein the coupling element (12a, 12b) is configured in the form of a thin film or in the form of a coating.

## Revendications

1. Dispositif (1) destiné à la détermination et/ou à la surveillance d'au moins une grandeur de process d'un produit (M), lequel dispositif comprend
une unité de capteur (2) avec une unité apte à vibrer mécaniquement (4), et au moins un premier élément piézoélectrique (11a, 11b),
l'élément piézoélectrique (11a, 11b) étant disposé au moins en partie dans un volume intérieur (10a, 10b) de l'unité apte à vibrer (4),
le dispositif (1) étant conçu pour
exciter l'unité apte à vibrer mécaniquement (4) au moyen d'un signal d'excitation (A) pour produire des vibrations mécaniques,
recevoir les vibrations mécaniques de l'unité apte à vibrer (4) et les convertir en un premier signal de réception (E_{A}), et déterminer et/ou surveiller au moins une grandeur de process à l'aide du premier signal de réception (E_{A}),
un élément de couplage (12a, 12b) étant disposé dans le volume intérieur (10a, 10b) de telle sorte que l'élément de couplage (12a, 12b) soit en contact mécanique avec l'élément piézoélectrique (11a, 11b),
au moins une cavité (10a, 10b) étant disposée dans l'unité apte à vibrer (4), la cavité (10a, 10b) formant le volume intérieur,
l'élément piézoélectrique (11a, 11b) et l'élément de couplage (12a, 12b) étant disposés dans la cavité (10a, 10b),
l'élément piézoélectrique (11a, 11b) étant disposé dans la cavité (10a, 10b) de telle sorte que l'élément piézoélectrique (11a, 11b) repose contre une paroi de la cavité (10a, 10b), et l'élément piézoélectrique (11a, 11b) étant disposé entre la paroi et l'élément de couplage (12a, 12b),
**caractérisé**
**en ce que** la cavité (10a, 10b) est remplie d'un produit de surmoulage,
**en ce que** l'élément de couplage (12a, 12b) comprend des moyens de fixation (14a, 14b) pour la fixation de l'élément de couplage (12a, 12b) dans la cavité (10a, 10b), et
**en ce que**, concernant le moyen de fixation (14a, 14b), il s'agit d'un élément à ressort.

2. Dispositif (1) selon la revendication 1,
lequel dispositif (1) est conçu
pour émettre un signal d'émission (S) et recevoir un deuxième signal de réception (E_{S}), et
pour déterminer et/ou surveiller au moins une grandeur de process à l'aide du premier signal de réception (E_{A}) et/ou du deuxième signal de réception (E_{S}).

3. Dispositif (1) selon la revendication 1 ou 2,
pour lequel l'unité de capteur (2) comprend au moins un premier élément piézoélectrique (11a) et un deuxième élément piézoélectrique (11b),
l'unité apte à vibrer mécaniquement (4) étant une fourche vibrante avec un premier (9a) et un deuxième élément vibrant (9b), et
pour lequel le premier élément piézoélectrique (11a) est disposé au moins en partie dans le premier élément vibrant (9a) et le deuxième élément piézoélectrique (11b) est disposé au moins en partie dans le deuxième élément vibrant (9b).

4. Dispositif (1) selon l'une des revendications 1 à 3,
pour lequel l'élément de couplage (12a, 12b) est constitué au moins en partie d'un matériau compressible, notamment d'un matériau présentant un coefficient de Poisson v < 0,3.

5. Dispositif (1) selon la revendication 4,
pour lequel le matériau compressible est une mousse.

6. Dispositif (1) selon la revendication 4 ou 5,
pour lequel l'élément de couplage (12a, 12b) est conçu sous la forme d'un film mince ou d'un revêtement.
